# EUROPÄISCHE PATENTSCHRIFT

(11) **EP 3 537 133 B1**
(45) Veröffentlichungstag und Bekanntmachung des Hinweises auf die Patenterteilung: **01.05.2024**
(21) Anmeldenummer: 19161043.5
(22) Anmeldetag: 06.03.2019
(51) Int. Cl.: G01N 21/3581, G01N 21/84

(54) **VERFAHREN UND VORRICHTUNG ZUR UNTERSUCHUNG VON SENDUNGEN**
METHOD AND APPARATUS FOR TESTING SHIPMENTS
PROCÉDÉ ET DISPOSITIF D'INSPECTION DES ENVOIS

(30) Priorität: 08.03.2018 DE 102018105352
(43) Veröffentlichungstag der Anmeldung: 11.09.2019
(73) Patentinhaber: Deutsche Post AG, 53113 Bonn (DE)
(72) Erfinder: SCHNEEBECK, Holger, 50968 Köln (DE); HAGEMANN, Dirk, 53115 Bonn (DE)
(74) Vertreter: Cohausz & Florack

(56) Entgegenhaltungen:
- EP-A1- 2 629 081
- WO-A1-2005/119214
- WO-A1-2016/063380
- WO-A2-03/102518
- DE-A1-102007 006 082
- US-A1- 2017 187 932

## Beschreibung

### Gebiet der Erfindung

Die Erfindung betrifft ein Verfahren und eine Vorrichtung zur Untersuchung von Sendungen, wie beispielsweise Kleingutsendungen, insbesondere hinsichtlich des Sendungsinhalts, wie sie beispielsweise in Paketzentren durchgeführt werden können. Zudem betrifft die Erfindung ein Computerprogramm.

### Hintergrund der Erfindung

Bei der Bearbeitung von Sendungen, das heißt beispielsweise Briefsendungen oder Kleingutsendungen, wie etwa Postkarten, Briefe, Päckchen oder Pakete, aber auch weiteres zu versendendes Beförderungsgut wie Palletten oder Container, etwa Unit Load Devices (ULDs), kann es erforderlich sein, bei der Bearbeitung eine Untersuchung der jeweiligen Sendung durchzuführen. So kann es nämlich wünschenswert oder erforderlich sein, Informationen über die jeweilige Sendung zu ermitteln.

Zum einen kann es beispielsweise erforderlich sein, bestimmte aufgedruckte Informationen oder geometrische Informationen, wie Abmessungen zu ermitteln. Aufgedruckte Informationen können jedoch unter Umständen verdeckt sein. Insbesondere bei Kleingutsendungen ist eine dreidimensionale Erfassung der Geometrie zur Bearbeitung der Sendung wünschenswert oder erforderlich. Ebenfalls ist es erwünscht, dass nicht nur von außen sichtbare Informationen (etwa die Abmessungen der Sendung) ermittelt werden, sondern zudem Informationen über den Inhalt der Sendung erfasst werden. Dies ist insbesondere bei Sendungen in Form von Containern, Paletten oder Kleingutsendungen der Fall, da hier sehr unterschiedliche Inhalte versendet werden können, so etwa verderbliche Inhalte (beispielsweise Lebensmittel), empfindliche Inhalte (beispielsweise feuchtigkeits- oder temperaturempfindliche Inhalte) oder auch unter Umständen gefährliche oder unzulässige Inhalte (beispielsweise Chemikalien, Gase, Sprengstoffe, Waffen oder ähnliches). Daher ist bei der Bearbeitung von Sendungen eine Information nicht nur über das Äußere der Sendung sondern auch über den Sendungsinhalt wünschenswert. Aus dem Stand der Technik, wie beispielsweise der US 2002/0126008 A1, ist es bekannt, gefährliche Inhalte von Sendungen mit Sensoren zu detektieren. Die Detektion kann mit einem olfaktorischen Sensor, einem UV- oder Infrarot-Detektor, einem Röntgengerät, einem Laser, einem Funksensor oder einem Wärmesensor erfolgen. Nachteilig daran ist zum einen, dass diese Detektoren sehr spezifisch sind. So können beispielsweise durch das Vorsehen eines Röntgengeräts zwar bestimmte Inhalte einer Sendung sichtbar gemacht werden. Allerdings kann beispielsweise keine spektroskopische Analyse von Substanzen oder die Feststellung eines Feuchtigkeitsgrades eines Objekts ermittelt werden. Ein umfassendes Bild über die Sendung bzw. den Sendungsinhalt würde vielmehr eine entsprechend hohe Anzahl von Sensoren erfordern, was die Untersuchung der Sendung sehr zeitaufwendig gestalten würde und die Wirtschaftlichkeit der Sendungsbearbeitung negativ beeinflusst, vor allem wenn eine sehr hohe Anzahl von Sendungen zu untersuchen. Ein Öffnen der Sendung ist in der Regel weder wirtschaftlich noch, bis auf wenige Ausnahmen, erlaubt.

WO 2005/119214 A1 offenbart eine Vorrichtung zur Untersuchung von Sendungen mit einem Untersuchungsbereich für zumindest eine Sendung. Die Vorrichtung umfasst eine Strahlungsquelle zur Emission von Strahlung im Terahertzbereich in den Untersuchungsbereich zur Untersuchung der zumindest einen Sendung und eine Sensoreinrichtung zur Erfassung von Strahlung aus dem Untersuchungsbereich.

### Allgemeine Beschreibung einiger beispielhafter Ausführungsformen der Erfindung

Vor diesem Hintergrund stellt sich der Erfindung die Aufgabe, ein Verfahren und eine Vorrichtung zur Untersuchung von Sendungen anzugeben, mit dem eine Untersuchung einer Sendung und insbesondere des Sendungsinhalts hinsichtlich unterschiedlicher Aspekte wirtschaftlich, das heißt insbesondere mit geringem vorrichtungstechnischem Aufwand und hoher Geschwindigkeit, erfolgen kann. Zudem soll ein vorteilhaftes Computerprogramm angegeben werden.

Gemäß einem ersten Aspekt wird die Aufgabe durch ein Verfahren gelöst, wie im beigefügten Anspruchssatz dargelegt.

Gemäß einem zweiten Aspekt wird die Aufgabe auch durch eine Vorrichtung zur Untersuchung von Sendungen gelöst, wie im beigefügten Anspruchssatz dargelegt.

Gemäß einem dritten Aspekt wird die Aufgabe auch gelöst durch ein Computerprogramm, das Programmanweisungen umfasst, die einen Prozessor zur Ausführung und/oder Steuerung eines erfindungsgemäßen Verfahrens veranlassen, wenn das Computerprogramm auf dem Prozessor läuft.

Zunächst wird zumindest eine Sendung in einem Untersuchungsbereich angeordnet. Wie eingangs bereits erläutert, kann eine Sendung beispielsweise eine Briefsendung (beispielsweise eine Postkarte oder ein Brief), eine Kleingutsendung (beispielsweise eine Päckchen oder Paket) oder auch ein größeres Beförderungsgut, wie beispielsweise eine Palette oder ein Container (etwa ein ULD) sein. Eine Sendung kann daher insbesondere eine Verpackung oder Umverpackung beispielsweise aus Papier, Pappe, Kunststoff und/oder Textilien aufweisen. Innerhalb der Verpackung befindet sich der Sendungsinhalt, beispielsweise ein oder mehrere zu versendende Objekte oder Gegenstände, die ihrerseits möglichweise wiederum eine Verpackung aufweisen können. Vorteilhaft werden die Sendungen vor einem Anordnen in dem Untersuchungsbereich vereinzelt, sodass vorzugsweise vereinzelte oder einzelne Sendung dort angeordnet werden bzw. eine Sendungen nach der anderen in dem Untersuchungsbereich angeordnet werden kann. Allerdings ist es ebenfalls möglich und bevorzugt, wenn mehrere Sendungen gemeinsam in dem Untersuchungsbereich angeordnet werden. Dies kann insbesondere der Fall sein, wenn mehrere Sendungen gemeinsam befördert werden (etwa einem Paket oder Container), sodass eine Vereinzelung von darin angeordneten Sendungen nicht oder nur aufwendig möglich ist. Bei einem Anordnen im Untersuchungsbereich kann die mindestens eine Sendung beispielsweise im Untersuchungsbereich zum Stillstand kommen, jedoch kann die Sendung den Untersuchungsbereich auch ohne Stillstand passieren bzw. durchqueren. Beispielsweise wird die Sendung im Wesentlichen linear in eine Transportrichtung bewegt um in den Untersuchungsbereich hinein und aus diesem heraus bewegt zu werden.

Beispielsweise kann das Verfahren bzw. die Vorrichtung zur Untersuchung von Sendungen in einem Versandzentrum, einer Hauptumschlagbasis (HUB), einem Paketzentrum oder einem Sortierzentrum Verwendung finden.

In den Untersuchungsbereich wird dabei zur Untersuchung der zumindest einen Sendung Strahlung von einer Strahlungsquelle emittiert. Der Untersuchungsbereich ist beispielsweise der durch die Strahlung der Strahlungsquelle erfasste Bereich. Die Strahlungsquelle kann dabei einen oder mehrere Emitter zur Emission der Strahlung umfassen, wie im Folgenden auch noch näher beschrieben wird. Durch die Strahlungsquelle kann die in dem Untersuchungsbereich befindliche Sendung mit der emittierten Strahlung zumindest teilweise bestrahlt werden.

Schließlich kann mittels einer Sensoreinrichtung von der Strahlungsquelle emittierte Strahlung aus dem Untersuchungsbereich erfasst werden. Die Strahlung ist beispielsweise von der Strahlungsquelle emittierte Strahlung, welche (teilweise) durch die Sendung transmittiert wurde und/oder an der Sendung oder dem Sendungsinhalt reflektiert wurde. Durch das Emittieren von Strahlung der Strahlungsquelle in den Untersuchungsbereich und der Erfassung von Strahlung aus dem Untersuchungsbereich kann ein Untersuchungsergebnis erhalten werden. Dieses kann beispielsweise Messdaten von einer oder mehreren Messungen der Sensoreinrichtung umfassen. Ebenfalls können mit den Messdaten der Sensoreinrichtung bereits weiteren Verarbeitungs- oder Analyseschritten durchgeführt worden sein, deren Ergebnis dann das Untersuchungsergebnis darstellen kann. Beispiele für Untersuchungsergebnisse sind etwa eine geometrische Information, eine Gegenstandsinformation, eine Stoffinformation, eine Schriftinformation und/oder eine Zustandsinformation insbesondere des Sendungsinhalts, wie im Folgenden noch näher beschrieben wird.

Es ist nun zum einen vorgesehen, dass die Strahlungsquelle eine Terahertz-Strahlungsquelle ist bzw. Terahertz-Strahlung emittiert. Zum anderen ist vorgesehen, dass die Strahlung bzw. die Strahlungsquelle dabei im Wesentlichen das gesamte Terahertz-Frequenzspektrum von 1 Terahertz an bis hin zu 6 Terahertz abdeckt. Darunter, dass im Wesentlichen das gesamte angegebene Spektrum abgedeckt wird, wird insbesondere verstanden, dass zumindest 90%, vorzugsweise zumindest 95%, weiter vorzugsweise zumindest 99% der Frequenzen abgedeckt sind. Es ist jedoch ebenfalls möglich und auch bevorzugt, dass ein größerer Teil des Terahertz-Frequenzspektrums (etwa im Wesentlichen das gesamte Terahertz-Frequenzspektrum von 1 Terahertz bis 30 Terahertz) abgedeckt wird, wie im Folgenden noch weiter beschrieben wird.

Durch die Verwendung der Terahertz-Strahlung kann eine berührungslose und beschädigungsfreie ("non-destructive testing", NDZ) Untersuchung, das heißt insbesondere Analyse oder Inspektion der Sendung und damit des Sendungsinhalts erfolgen. Typischerweise für die Verpackung eingesetzte Materialien wie Papier, Pappe, Kunststoff oder Textilien können dabei durchdrungen werden. Dadurch, dass die Terahertz-Strahlungsquelle im Wesentlichen das gesamte angegebene Terahertz-Frequenzspektrum abdeckt, können durch nur eine Vorrichtung bzw. eine Untersuchung vielfältige Informationen über die Sendung und insbesondere den Sendungsinhalt erhalten werden. Obwohl mit der Sendungsbearbeitung ein breites Spektrum an zu untersuchenden Gegenständen einhergeht und zudem eine Eingrenzung oder eine bestimmte Erwartung des Sendungsinhalts im Voraus in der Regel nicht möglich ist, hat sich das erfindungsgemäße Verfahren vor dem Hintergrund der typischerweise gewünschten Informationen als vorteilhaft erwiesen und es können Untersuchungsergebnisse mit geringem vorrichtungstechnischem Aufwand und hoher Geschwindigkeit erzielt werden.

Die Abdeckung des Terahertz-Frequenzspektrums muss dabei nicht vollständig zusammenhängend sein. Vielmehr können einzelne unzusammenhängende Terahertz-Frequenzbereiche vorhanden sein. Ebenfalls muss nicht in jedem abgedeckten Terahertz-Frequenzbereich die gleiche Intensität erzielt werden. In einem Beispiel kann eine Terahertz-Frequenz oder ein Terahertz-Frequenzbereich als abgedeckt angesehen werden, wenn bei der Terahertz-Frequenz oder in dem Terahertz-Frequenzbereich zumindest 1%, vorzugsweise 10%, weitervorzugsweise 50% oder sogar 80% des Intensitätsmaximums des emittierten Terahertz-Spektrums erzielt wird.

Die Terahertz-Strahlungsquelle kann dabei eine zur Erzeugung der gewünschten Terahertz-Strahlung geeignet Strahlungsquelle sein. Die Terahertz-Strahlungsquelle kann beispielsweise kontinuierliche Terahertz-Strahlung und/oder gepulste Terahertz-Strahlung erzeugen. Denkbare Terahertz-Strahlungsquellen sind oder basieren beispielsweise auf der Frequenzvervielfachung (etwa mit Hilfe von GaAs-Schottky-Dioden) oder der Differenzfrequenzbildung von zwei Lasersignalen (beispielsweise von Distributed Feedback Lasern) an nichtlinearen Bauelementen. Ebenfalls möglich sind Quantenkaskadenlaser, Molekülgaslaser, Freie-Elektronen-Laser, optisch-parametrische Oszillatoren oder Rückwärtswellenoszillatoren. Ebenfalls können Laserpulse in Halbleitern oder nichtlinearen optischen Materialien Terahertz-Strahlung erzeugen. Auch Kombinationen hiervon zur Erzeugung der Terahertz-Strahlung sind denkbar. Ebenfalls ist es bevorzugt, wenn eine ausreichende Leistung bei Raumtemperatur erzielt werden kann, sodass das Verfahren bei Raumtemperatur ohne die Verwendung von beispielsweise flüssigem Stickstoff zur Kühlung der Terahertz-Strahlungsquelle durchgeführt werden kann.

Es ist grundsätzlich möglich, dass noch weitere Strahlungsquellen vorgesehen sein können, welche nicht notwendigerweise Terahertz-Strahlungsquellen sein müssen (beispielsweise eine Röntgenquelle, eine Laserquelle oder eine Infrarotquelle) und die ebenfalls der Untersuchung der zumindest einen Sendung dienen. Es hat sich aber vorteilhaft gezeigt, dass bei vorrichtungstechnisch geringem Aufwand eine Terahertz-Strahlungsquelle die einzige Strahlungsquelle sein kann und weitere Strahlungsquellen (etwa ein Röntgenquelle oderein 6-Seiten-Laser-Scanner) vorteilhaft ersetzen kann.

Die Sensoreinrichtung kann einen oder mehrere Sensoren umfassen. Die Sensoreinrichtung ist insbesondere auf die Strahlungsquelle abgestimmt. Das heißt, die Sensoreinrichtung kann insbesondere als Sensoreinrichtung zur Detektion von Terahertz-Strahlung angesehen werden (Terahertz-Sensoreinrichtung). Beispielsweise kann die Sensoreinrichtung zumindest diejenigen Frequenzen aus dem Terahertz-Frequenzspektrum detektieren, die von der Strahlungsquelle emittiert werden. Die Sensoreinrichtung kann beispielsweise zeit-, orts- und/oder frequenzauflösende Messungen durchführen. Beispielsweise kann die Sensoreinrichtung ein oder mehrere Bolometer umfassen, insbesondere ein oder mehrere Mikrobolometerarrays, mit denen vorteilhaft ortsauflösende Messungen insbesondere bei Raumtemperatur erfolgen können.

Gemäß einer bevorzugten Ausgestaltung deckt die Terahertz-Strahlungsquelle im Wesentlichen das gesamte Terahertz-Frequenzspektrum von 0,5 Terahertz an, vorzugsweise von 0,3 Terahertz an, weiter vorzugsweise von 0,1 Terahertz an und/oder bis hin zu 10 Terahertz, vorzugsweise bis hin zu 20 Terahertz, weitere vorzugsweise bis hin zu 30 Terahertz ab. Durch eine Abdeckung der beschriebenen Bereiche des Terahertz-Frequenzspektrums können umfangreiche Informationen über die Sendung bzw. eine Vielzahl von möglichen Inhalten ermittelt werden.

Gemäß einer bevorzugten Ausgestaltung der unterschiedlichen Aspekte der Erfindung werden die von der Strahlungsquelle abgedeckten Frequenzen des Terahertz-Frequenzspektrums gleichzeitig oder zumindest teilweise zeitversetzt emittiert. Eine gleichzeitige Emission der durch die Terahertz-Strahlungsquelle abgedeckten Frequenzen des Terahertz-Frequenzspektrums kann beispielsweise durch ein oder mehrere Terahertz-Emitter, welche jeweils den gesamten Bereich des Terahertz-Bereichs abdecken, erzielt werden. Ebenfalls ist denkbar, dass mehrere Terahertz-Emitter verwendet werden, welche jeweils unterschiedliche Bereiche des Terahertz-Frequenzspektrums emittieren und zusammen die gewünschten Frequenzen des Terahertz-Frequenzspektrums abdecken. Hierdurch kann eine kurze Untersuchungszeit realisiert werden. Eine zeitversetzte Emission der durch die Terahertz-Strahlungsquelle abgedeckten Frequenzen des Terahertz-Frequenzspektrums kann beispielsweise erfolgen, wenn im Falle von mehreren Terahertz-Emittern diese nacheinander aktiviert werden. Ebenfalls können beispielsweise ein oder mehrere durchstimmbarer Terahertz-Emitter verwendet werden, welche durch zumindest einen Teil der von der Strahlungsquelle abgedeckten Frequenzen des Terahertz-Frequenzspektrums gestimmt werden können und auf diese Weise zeitlich versetzt das entsprechende Terahertz-Frequenzspektrum emittieren können. Dies kann die Anzahl der notwendigen Emitter reduzieren.

Gemäß einer bevorzugten Ausgestaltung der Aspekte der Erfindung umfasst die Terahertz-Strahlungsquelle zumindest zwei Terahertz-Emitter und die Terahertz-Strahlung wird durch die zumindest zwei Terahertz-Emitter emittiert. Es sind also zumindest ein erster und ein zweiter Terahertz-Emitter vorgesehen. Ebenfalls sind weitere Terahertz-Emitter denkbar. Die Terahertz-Emitter könnend den Untersuchungsbereich bzw. die Sendung beispielsweise in unterschiedlichen Höhen und/oder in unterschiedlichen Winkeln bestrahlen. Zur effektiven Erfassung der Strahlung aus dem Untersuchungsbereich entspricht in einem Beispiel die Anzahl der Sensoren der Sensoreinrichtung der Anzahl der Terahertz-Emitter der Terahertz-Strahlungsquelle. Beispielsweise sind die Sensoren der Sensoreinrichtung zumindest teilweise gegenüberliegend der Emitter der Terahertz-Strahlungsquelle angeordnet.

Gemäß einer bevorzugten Ausgestaltung der unterschiedlichen Aspekte der Erfindung emittiert zumindest ein Terahertz-Emitter der Strahlungsquelle die Terahertz-Strahlung breitbandig. Hierdurch ist nur eine geringe Anzahl von Terahertz-Emittern erforderlich, um die Frequenzen des abzudeckenden Bereichs des Terahertz-Frequenzspektrums zu emittieren. Beispielsweise emittiert ein Terahertz-Emitter jeweils mit einer Frequenzbandbreite von zumindest 6 THz, zumindest 10 THz oder zumindest 30 THz. Ebenfalls ist denkbar, dass ein Terahertz-Emitter Terahertz-Strahlung im gesamten abzudeckenden Bereich emittiert.

Alternativ ist jedoch auch denkbar, dass die Frequenzen des abzudeckenden Bereichs des Terahertz-Frequenzspektrums durch Verwendung entsprechend vieler einzelner schmalbandig emittierender Terahertz-Emitter abgedeckt werden.

Gemäß einer bevorzugten Ausgestaltung der unterschiedlichen Aspekte der Erfindung wird die Terahertz-Strahlungsquelle durchgestimmt. Die Terahertz-Strahlungsquelle der Vorrichtung ist hierzu durchstimmbar. Hierdurch können Frequenzen gezielt eingestellt werden und durch einen Emitter (zeitlich versetzt) emittiert werden. Beispielsweise sind einzelne oder alle vorgesehenen Terahertz-Emitter durchstimmbar, beispielsweise über einen Frequenzbereich von zumindest 3 THz, zumindest 6 THz oder zumindest 10 THz.

Wird ein hoher Frequenz-Durchstimmbereich benötigt, ist es beispielsweise möglich, einen Photomischer zu verwenden, der die Differenzfrequenz zweier Laser in Wechselstrom umwandelt, welcher schließlich durch eine geeignete Antenne abgestrahlt wird. Beispiele hierfür sind Low-Temperature-Grown GaAs, Unitravelling-Carrier Photodioden, n-i-pn-i-p-Übergitter-Photodioden.

Gemäße einer bevorzugten Ausgestaltung wird mittels der durch die Sensoreinrichtung erfassten Strahlung aus dem Untersuchungsbereich eine geometrische Information und/oder eine Schriftinformation der Sendung und/oder eines oder mehrerer Objekte innerhalb der Sendung ermittelt.

Unter einem innerhalb der Sendung befindlichen Objekt wird ein Objekt innerhalb einer äußeren Verpackung der Sendung verstanden. Eine geometrische Information kann beispielsweise eine Information repräsentativ für die Form und/oder Größe der Sendung bzw. eines oder mehrerer Objekte innerhalb der Sendung sein. Die geometrische Information kann beispielsweise auch eine Repräsentation im Wesentlichen der gesamten Objektgeometrie (ein 3D-Abbild) sein. Besonders vorteilhaft wird die ermittelte geometrische Information der Sendung zur Steuerung einer für den Transport der Sendungen verwendeten Förderanlage verwendet werden. Mit anderen Worten dient die ermittelte geometrische Information der Sendung als Eingangsgröße für die Steuerung der Förderanlage. Hierzu bisher verwendete 6-Seiten-Scanner sind dann beispielsweise nicht mehr erforderlich.

Unter einer Schriftinformation wird insbesondere eine Information repräsentativ für eine Schrift auf der Sendung oder auf einem Objekt in Sendung verstanden. Hierbei kann es sich beispielsweise um eine menschenlesbare und/oder maschinenlesbare Schrift handeln. Schriften auf der Sendung können beispielsweise Versandinformationen beinhalten. Schriften auf einem Objekt in der Sendung können insbesondere bei der Ermittlung einer wie nachfolgend beschriebenen Gegenstandsinformation, Stoffinformation oder Zustandsinformation verwendet werden.

Gemäß der Erfindung wird mittels der durch die Sensoreinrichtung erfassten Strahlung aus dem Untersuchungsbereich eine Gegenstandsinformation, eine Stoffinformation und/oder eine Zustandsinformation eines oder mehrerer innerhalb der Sendung befindlichen Objekte oder Stoffe ermittelt.

Unter einer Gegenstandsinformation wird insbesondere eine Information repräsentativ für einen Typ, eine Art oder eine Kategorie eines Gegenstandes innerhalb der Sendung verstanden. Beispielsweise erlaubt die Gegenstandsinformation eine Kategorisierung des Gegenstands. Beispiele für einen solchen Typ, eine solche Art oder eine solche Kategorie eines Gegenstandes sind "Lebensmittel", "Kochsalzpackung", "Elektronikgerät", "Waffe", "Akku", "erlaubter Gegenstand", "nicht erlaubter Gegenstand" etc., um nur einige Beispiele zu nennen. Unter einer Stoffinformation wird insbesondere eine Information repräsentativ für einen Typ, eine Art oder eine Kategorie eines Stoffes innerhalb der Sendung verstanden. Hierbei können insbesondere Informationen über Stoffe in Behältnissen innerhalb der Sendung ermittelt werden. Beispielsweise erlaubt die Gegenstandsinformation eine Kategorisierung des Stoffes. Beispiele für einen solchen Typ, eine solche Art oder eine solche Kategorie eines Stoffes sind "Kochsalz", "Ammoniumnitrat", "Sprengstoff", "erlaubter Stoff", "nicht erlaubter Stoff" etc., um nur einige Beispiele zu nennen. Hierdurch ist beispielsweise die Verwendung eines Nahinfrarotspektrometers nicht mehr erforderlich.

Unter einer Zustandsinformation wird insbesondere eine Information repräsentativ für einen möglichen Zustand oder eine Zustandskategorie eines Objekts oder Stoffs innerhalb der Sendung verstanden. Beispielsweise erlaubt die Zustandsinformation eine Kategorisierung des Objekts oder Stoffs. Beispiele für einen solchen möglichen Zustand oder eine solche Zustandskategorie sind der Feuchtigkeitsgehalt oder die Frische eines Objekts oder Stoffs (beispielsweise eines Lebensmittels, was etwa durch den Wassergehalt festgestellt werden kann).

Die hierin beschriebenen Informationen können insbesondere zumindest teilweise basierend auf der Transmission, der Reflexion und/oder der Absorption durch die Sendung und/oder das Objekt innerhalb der Sendung hinsichtlich der Terahertz-Strahlung ermittelt werden. Die Transmission, die Reflexion und/oder die Absorption (beispielsweise der Transmissionsgrad, der Reflexionsgrad und/oder der Absorptionsgrad) können dabei ortsaufgelöst, zeitaufgelöst und/oder frequenzsaufgelöst ermittelt werden. So biete sich beispielsweise die Detektion von Metall (beispielsweise zur Identifikation eines Akkus oder einer Waffe) durch die Reflexionseigenschaften von Metall im Terahertz-Spektrum an. Beispielsweise bietet sich die Eigenschaft von Wasser, Terahertz-Strahlung zu absorbieren, zur Identifikation von Objekten mit einem Wasseranteil (Flüssigkeiten, Lebensmittel wie Obst oder Gemüse) und zur Identifikation des Zustandes hiervon an. Beispielsweise bieten sich spektrale Analysen (Spektroskopie) zur Identifikation von Stoffen (beispielsweise Sprengstoff, Gase) an. So können beispielsweise Sprengstoffe oder Drogen in Behältnissen identifiziert werden, da sie oberhalb von 0,5 THz charakteristische Absorptionsspektren aufweisen.

Gemäß einer bevorzugten Ausgestaltung der unterschiedlichen Aspekte der Erfindung umfasst das Verfahren weiterhin ein Prüfen, ob sich zumindest eine Sendung im Untersuchungsbereich befindet, vorzugsweise mittels der Strahlungsquelle und der Sensoreinrichtung. Beispielsweise sendet die Strahlungsquelle hierzu kontinuierliche oder (regelmäßig) gepulste Terahertz-Strahlung aus und prüft anhand der Sensoreinrichtung die Anwesenheit zumindest einer Sendung im Untersuchungsbereich. Die hierzu verwendet Terahertz-Strahlung ist beispielsweise von geringer Leistung oder Intensität (beispielsweise geringer als eine anschließen verwendete Leistung oder Intensität). Auf diese Weise kann vorteilhaft ohne weitere Vorrichtungen das Vorhandensein einer Sendung festgestellt werden.

Gemäß einer bevorzugten Ausgestaltung der unterschiedlichen Aspekte der Erfindung sendet die Strahlungsquelle zum Prüfen, ob sich zumindest eine Sendung im Untersuchungsbereich befindet, Terahertz-Strahlung mit einer ersten Strahlungseigenschaft aus. Die Strahlungseigenschaft kann beispielsweise die Intensität oder die Leistung sein. Diese Strahlungseigenschaft unterscheidet sich beispielsweise von einer später verwendeten zweiten Strahlungseigenschaft. Im Falle der Intensität oder Leistung wird beispielsweise eine geringere Intensität oder Leistung verwendet als bei einer später verwendeten Terahertz-Strahlung mit einer zweiten Strahlungseigenschaft für die Untersuchung der Sendung. Bevorzugt kann jedoch durch die Terahertz-Strahlung mit der ersten Strahlungseigenschaft bereits eine geometrische Information der Sendung, wie bereits beschrieben, ermittelt werden.

Gemäß einer bevorzugten Ausgestaltung der unterschiedlichen Aspekte der Erfindung sendet die Strahlungsquelle, wenn das Prüfen ergibt, dass sich zumindest eine Sendung im Untersuchungsbereich befindet, Terahertz-Strahlung mit einer zweiten Strahlungseigenschaft aus. Wie beschrieben, kann die Strahlungseigenschaft insbesondere die Intensität oder Leistung der Terahertz-Strahlung sein, welche insbesondere höher sein kann als diejenige der Terahertz-Strahlung zum Prüfen, ob sich zumindest eine Sendung im Untersuchungsbereich befindet. Mit der Terahertz-Strahlung mit der zweiten Strahlungseigenschaft kann die bereits beschriebene Untersuchung der zumindest einen Sendung im Untersuchungsbereich erfolgen, beispielsweise um eine geometrische Information, eine Schriftinformation, eine Gegenstandsinformation, eine Stoffinformation oder eine Zustandsinformation zu ermitteln.

Gemäß einer bevorzugten Ausgestaltung der unterschiedlichen Aspekte der Erfindung wird zum Untersuchen der zumindest einen Sendung Terahertz-Strahlung unterschiedlicher Leistung oder Intensität in den Untersuchungsbereich emittiert. Unter der Leistung oder Intensität wird insbesondere die mittlere oder maximale Leistung bzw. Intensität verstanden. Hierdurch kann der Tatsache Rechnung getragen werden, dass es zur Untersuchung unterschiedliche Sendungen bzw. unterschiedlicher darin befindliche Gegenstände unter Umständen unterschiedlicher Leistungen oder Intensitäten bedarf. So kann beispielsweise zunächst eine Untersuchung mit geringer und anschließend eine Untersuchung mit höherer Leistung oder Intensität erfolgen.

So kann gemäß einer bevorzugten Ausgestaltung der unterschiedlichen Aspekte der Erfindung zum Untersuchen der zumindest einen Sendung zunächst Terahertz-Strahlung mit einer ersten Leistung oder Intensität und, insbesondere wenn festgestellt wird, dass die Terahertz-Strahlung mit der ersten Leistung oder Intensität nicht ausreicht, um die zumindest eine Sendung zu untersuchen, anschließend Terahertz-Strahlung mit einer zweiten, im Vergleich zur ersten Leistung oder Intensität höheren Leistung oder Intensität in den Untersuchungsbereich emittiert werden. Die Terahertz-Strahlung mit der ersten Leistung oder Intensität kann beispielsweise als nicht ausreichend angesehen werden, wenn die Sensoreinheit kein oder ein zu geringes Signal von Terahertz-Strahlung aus dem Untersuchungsbereich erfasst.

Gemäß der Erfindung wird ein Untersuchungsergebnis einer mittels der Strahlungsquelle und der Sensoreinrichtung im Untersuchungsbereich untersuchten Sendung mit Referenzinformationen abgeglichen, um eine Identifikation des Gegenstands, Stoffes oder Zustands zu erzielen, und Referenzinformationen basierend auf dem Untersuchungsergebnis abgeändert und/oder angereichert.

Ein Untersuchungsergebnis kann beispielsweise Messdaten von einer oder mehreren Messungen von durch die Sensoreinrichtung erfasster Strahlung aus dem Untersuchungsbereich umfassen. Ein Untersuchungsergebnis kann beispielsweise eine wie beschriebene ermittelte geometrische Information, Schriftinformation, Gegenstandsinformation, Stoffinformation und/oder Zustandsinformation sein. Die der Referenzinformation kann beispielsweise auf Messdaten aus Referenzmessungen oder Messdaten bisheriger Messungen basieren. Die Referenzinformation ist beispielsweise in einer Datenbank gespeichert. Die Referenzinformation ist beispielsweise lokal in der das Verfahren durchführenden Vorrichtung (beispielsweise in einem Steuerrechner der Vorrichtung) gespeichert oder in einem zentralen Server. Das Untersuchungsergebnis kann beispielsweise an den Server gesendet werden, sodass der Abgleich durch den Server erfolgen kann.

Dadurch, dass alternativ oder zusätzlich Referenzinformationen basierend auf dem Untersuchungsergebnis abgeändert und/oder angereichert werden, um eine Identifikation des Gegenstands, Stoffes oder Zustands zu erzielen, kann ein eine Aktualisierung der Referenzinformation erfolgen. Das Abändern und/oder Anreichern der Referenzinformation kann insbesondere durch einen lernfähigen Algorithmus erfolgen. Beispielsweise erfolgt das Abändern und/oder Anreichern der Referenzinformation durch maschinelles Lernen, beispielsweise basierend auf überwachtem oder unüberwachten Lernen, beispielsweise basierend auf einem neuronalen Netzwerk. Um ein Beispiel zu nennen, kann die (erlernte) Referenzinformation beispielsweise angeben, dass in einer bestimmten Verpackung beispielsweise Kochsalz enthalten sein sollte (bzw. bisher immer war), nun jedoch ein unbekannter oder anderer Inhalt gefunden wird. Dies kann beispielsweise zur Einstufung des Gegenstands als unbekannter oder unerlaubter Gegenstand führen.

Gemäß der Erfindung wird die zumindest eine Sendung mittels einer Förderanlage in den und/oder aus dem Untersuchungsbereich, insbesondere durch den Untersuchungsbereich hindurch, transportiert. Die Vorrichtung umfasst also vorzugsweise weiterhin eine Förderanlage zum Transport der Sendungen in den und/oder aus dem Untersuchungsbereich und führt insbesondere durch den Untersuchungsbereich hindurch. Die Förderanlage umfasst beispielsweise einen Bandförderer und/oder Rollenförderer. Die Vorrichtung kann dabei beispielsweise torförmig ausgebildet sein, wobei die Förderanlage durch die Vorrichtung hindurchführt.

Gemäß einer bevorzugten Ausgestaltung der unterschiedlichen Aspekte der Erfindung wird die zumindest eine Sendung vor und/oder in dem Untersuchungsbereich verlangsamt und/oder abgestoppt. Dadurch befindet sich die zumindest eine Sendung für eine längere Zeit im Untersuchungsbereich, was mehr Zeit für die Untersuchung ermöglicht und die Qualität des Untersuchungsergebnisses verbessern kann.

Vorteilhafterweise kann dies beispielsweise dadurch erreicht werden, dass gemäß einer bevorzugten Ausgestaltung der unterschiedlichen Aspekte der Erfindung der Untersuchungsbereich in einem Vereinzelungsbereich der Förderanlage angeordnet ist. Dadurch kann insbesondere sichergestellt werden, dass nur sich jeweils nur eine Sendung gleichzeitig in dem Untersuchungsbereich befindet.

Gemäß einer bevorzugten Ausgestaltung der unterschiedlichen Aspekte der Erfindung wird die Strahlungsquelle und/oder die Sensoreinrichtung oder ein Teil hiervon während der Untersuchung relativ zu einer im Untersuchungsbereich angeordneten Sendung, insbesondere quer zu einer Transportrichtung einer im Untersuchungsbereich angeordneten Sendung, bewegt und vorzugsweise um eine im Untersuchungsbereich angeordnete Sendung herum rotiert. Die Terahertz-Strahlungsquelle und/oder die Sensoreinrichtung kann also insbesondere beweglich zu einer im Untersuchungsbereich angeordneten Sendung, insbesondere um eine im Untersuchungsbereich angeordneten Sendung herum rotierbar, ausgebildet sein. Die Transportrichtung einer Sendung wird beispielsweise im Wesentlichen durch die Förderanlage bestimmt, mit der die Sendung transportiert wird. Beispielsweise sind die Terahertz-Strahlungsquelle bzw. der zumindest eine Terahertz-Emitter und/oder die Sensoreinrichtung bzw. der zumindest eine Sensor um den Untersuchungsbereich herum angeordnet. Beispielsweise kann dadurch die zumindest eine Sendung von unterschiedlichen Seiten und der Winkeln bestrahlt werden.

Alternativ ist es aber ebenfalls möglich, dass Terahertz-Strahlungsquelle und/oder die Sensoreinrichtung, beispielsweise seitlich und/oder oberhalb des Fördermittels ortsfest angeordnet sind.

Die zuvor in dieser Beschreibung beschriebenen beispielhaften Ausgestaltungen der vorliegenden Erfindung sollen auch in allen Kombinationen miteinander offenbart verstanden werden, im Rahmen der Erfindung, wie in den beigefügten Ansprüchen dargelegt.

Dabei sollen durch die vorherige und folgende Beschreibung von Verfahrensschritten gemäß bevorzugter Ausführungsformen des Verfahrens auch entsprechende Mittel zur Durchführung der Verfahrensschritte durch bevorzugte Ausführungsformen der Vorrichtung offenbart sein. Ebenfalls soll durch die Offenbarung von Mitteln zur Durchführung eines Verfahrensschrittes der entsprechende Verfahrensschritt offenbart sein.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Zeichnungen

- Fig. 1: eine perspektivische Ansicht eines Ausführungsbeispiels einer Vorrichtung;
- Fig. 2a, b: eine Seitenansicht und eine Frontalansicht eines weiteren Ausführungsbeispiels einer Vorrichtung;
- Fig. 3: eine Blockdiagramm eines Ausführungsbeispiels einer Vorrichtung; und
- Fig. 4: ein Flussdiagramm eines Ausführungsbeispiels eines Verfahrens gemäß der Erfindung.

### Detaillierte Beschreibung einiger beispielhafter Ausführungsformen der Erfindung

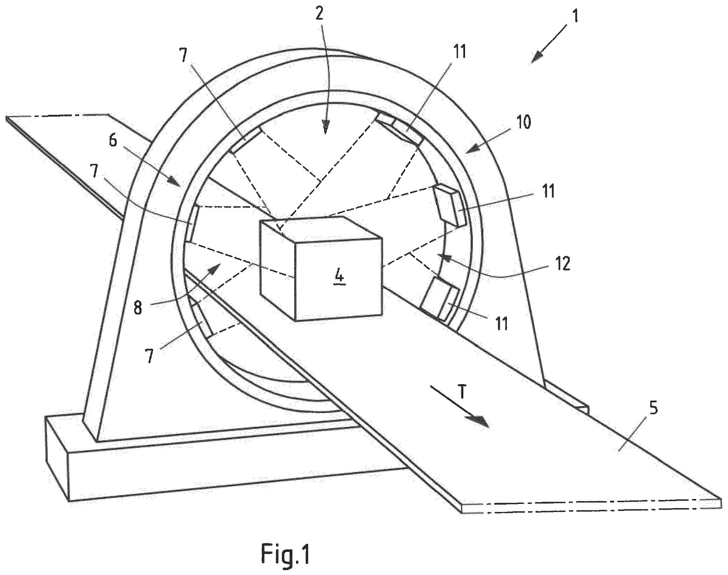

Fig. 1 zeigt zunächst eine perspektivische Ansicht eines Ausführungsbeispiels einer Vorrichtung 1 zur Untersuchung von Sendungen.

Die Vorrichtung 1 ist dazu eingerichtet, Ausführungsbeispiele des Verfahrens durchführen.

Die Vorrichtung 1 umfasst einen Untersuchungsbereich 2 für zumindest eine Sendung 4, welche hier beispielhaft als vereinzeltes Paket dargestellt ist. Die Sendung 4 kann mittels einer Förderanlage 5, hier ein Paketband, entlang der Transportrichtung T durch den Untersuchungsbereich 2 hindurch transportiert werden und damit in dem Untersuchungsbereich 2 angeordnet werden. Die Sendung 4 kann beispielsweise vor dem Untersuchungsbereich 2 verlangsamt werden oder auch in dem Untersuchungsbereich 2 bei Bedarf zur Untersuchung abgestoppt werden.

Die Vorrichtung 1 umfasst weiterhin eine Terahertz-Strahlungsquelle 6 mit Terahertz-Emittern 7 zur Emission von Strahlung 8 in den Untersuchungsbereich 2 zur Untersuchung der zumindest einen Sendung 4. Ebenfalls umfasst die Vorrichtung 1 eine Sensoreinrichtung 10 mit Terahertz-Sensoren 11 zur Erfassung von Strahlung 12 aus dem Untersuchungsbereich 2. Die Terahertz-Strahlungsquelle 6 deckt dabei im Wesentlichen das gesamte Terahertz-Frequenzspektrum jedenfalls von 1 Terahertz an bis hin zu 6 Terahertz ab. Bevorzugt wird jedoch im Wesentlichen das gesamte Terahertz-Frequenzspektrum von 1 Terahertz oder sogar 0,3 Terahertz an bis hin zu 10, 20 oder 30 Terahertz abgedeckt.

Die Strahlungsquelle 6 und die Sensoreinrichtung 10 sind in diesem Beispiel derart vorgesehen, dass diese bzw. die Terahertz-Emitter 7 und die Sensoren 11 gegenüberliegend und um die Sendung 4 herum und senkrecht zur Transportrichtung T rotierbar sind.

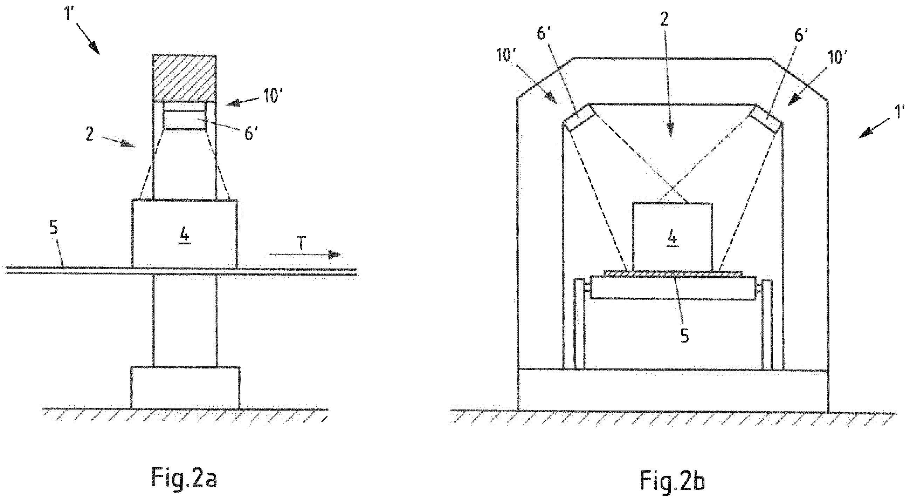

Alternativ ist jedoch auch die in Fig. 2 beispielhaft dargestellte Anordnung möglich.

Fig. 2 zeigt ein Seitenansicht (Fig. 2a) und eine Frontalansicht (Fig. 2b) eines weiteren Ausführungsbeispiels einer Vorrichtung 1'.

Auch die Vorrichtung 1 der Fig. 2 ist dazu eingerichtet, Ausführungsbeispiele des Verfahrens durchführen.

Die Vorrichtung 1' umfasst ebenfalls einen Untersuchungsbereich 2 für zumindest eine Sendung 4, hier ebenfalls ein vereinzeltes Paket. Die Sendung 4 kann mittels der Förderanlage 5 entlang der Transportrichtung T durch den Untersuchungsbereich 2 hindurch transportiert werden und damit in dem Untersuchungsbereich 2 angeordnet werden. Auch hier kann die Sendung 4 beispielsweise vor dem Untersuchungsbereich 2 verlangsamt werden oder auch in dem Untersuchungsbereich 2 bei Bedarf zur Untersuchung abgestoppt werden.

Die Vorrichtung 1' umfasst weiterhin eine Terahertz-Strahlungsquelle 6' mit Terahertz-Emittern 7' zur Emission von Strahlung 8 in den Untersuchungsbereich 2 zur Untersuchung der zumindest einen Sendung 4. Ebenfalls umfasst die Vorrichtung 1' eine Sensoreinrichtung 10' mit Terahertz-Sensoren 11' zur Erfassung von Strahlung 12 aus dem Untersuchungsbereich 2. Auch die Terahertz-Strahlungsquelle 6' deckt dabei im Wesentlichen das gesamte Terahertz-Frequenzspektrum jedenfalls von 1 Terahertz bis hin zu 6 Terahertz oder mehr ab.

Im Unterschied zu dem in Fig. 1 gezeigten Ausführungsbeispiel sind die Terahertz-Strahlungsquelle 6' und die Sensoreinrichtung 10' in diesem Beispiel derart vorgesehen, dass diese bzw. die Terahertz-Emitter und die Sensoren (nicht dargestellt) oberhalb der Sendung 4 und ortsfest angeordnet sind. Dabei sind die Strahlungsquelle 6' und Sensoreinrichtung 10' als eine Baugruppe ausgeführt.

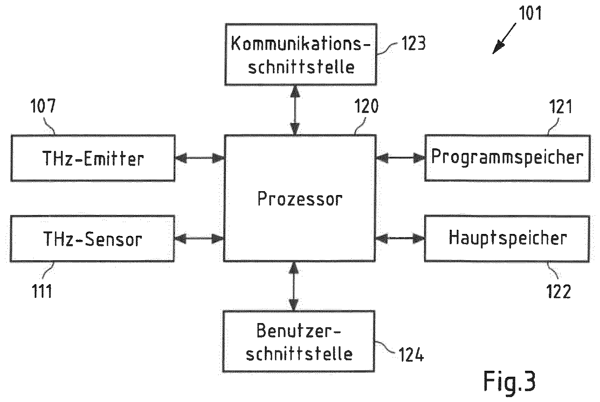

Fig. 3 zeigt ein Blockdiagramm einer Vorrichtung 101, welche ebenfalls ein Ausführungsbeispiel einer Vorrichtung sein kann bzw. die hardwaretechnischen Komponenten der Vorrichtungen 1 und 1' der Fig. 1 und 2 darstellt. Die Vorrichtungen 1, 1' können insofern insbesondere einen Steuercomputer mit den dargestellten Komponenten umfassen. Die Vorrichtung 101 kann dabei beispielsweise die Funktion eines Clients erfüllen. Alternativ ist es jedoch auch möglich, dass einzelne der dargestellten Komponenten auch durch einen (entfernten, zentralen) Server realisiert sind. Die Vorrichtung 101 kann dabei beispielsweise die Funktion eines Servers erfüllen.

Prozessor 120 der Vorrichtung 101 ist insbesondere als Mikroprozessor, Mikrokontrolleinheit, Mikrocontroller, digitaler Signalprozessor (DSP), Anwendungsspezifische Integrierte Schaltung (ASIC) oder Field Programmable Gate Array (FPGA) ausgebildet.

Repräsentativ für die Emitter 7 der Strahlungsquelle 6, 6' ist in Fig. 3 ein THz-Emitter 107 dargestellt. Repräsentativ für die Sensoren 11 der Sensoreinrichtung 10, 10' ist in Fig. 3 weiterhin ein THz-Sensor 111 dargestellt. Prozessor 120 steuert den THz-Emitter 107 und den THz-Sensor 111.

Prozessor 120 führt weiterhin Programmanweisungen aus, die in Programmspeicher 121 gespeichert sind, und speichert beispielsweise Zwischenergebnisse oder ähnliches in Arbeits- oder Hauptspeicher 122. Zum Beispiel ist Programmspeicher 121 ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Hauptspeicher 122 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Programmspeicher 121 ist vorzugsweise ein lokaler mit der Vorrichtung 101 fest verbundener Datenträger. Mit der Vorrichtung 101 fest verbundene Datenträger sind beispielsweise Festplatten, die in die Vorrichtung 101 eingebaut sind. Alternativ kann der Datenträger beispielsweise auch ein mit der Vorrichtung 101 trennbar verbindbarer Datenträger sein wie ein Speicher-Stick, ein Wechseldatenträger, eine tragbare Festplatte, eine CD, eine DVD und/oder eine Diskette.

Programmspeicher 121 enthält beispielsweise das Betriebssystem von der Vorrichtung 101, das beim Starten der Vorrichtung 101 zumindest teilweise in Hauptspeicher 122 geladen und vom Prozessor 120 ausgeführt wird. Insbesondere wird beim Starten von Vorrichtung 1 zumindest ein Teil des Kerns des Betriebssystems in den Hauptspeicher 122 geladen und von Prozessor 120 ausgeführt. Das Betriebssystem von Vorrichtung 1 ist beispielsweise ein Windows -, UNIX-, Linux-, Android-, Apple iOS- und/oder MAC-Betriebssystem.

Das Betriebssystem ermöglicht insbesondere die Verwendung der Vorrichtung 101 zur Datenverarbeitung. Es verwaltet beispielsweise Betriebsmittel wie Hauptspeicher 122 und Programmspeicher 121, Kommunikationsschnittstelle 123, Benutzerschnittstelle 124, stellt unter anderem durch Programmierschnittstellen anderen Programmen grundlegende Funktionen zur Verfügung und steuert die Ausführung von Programmen.

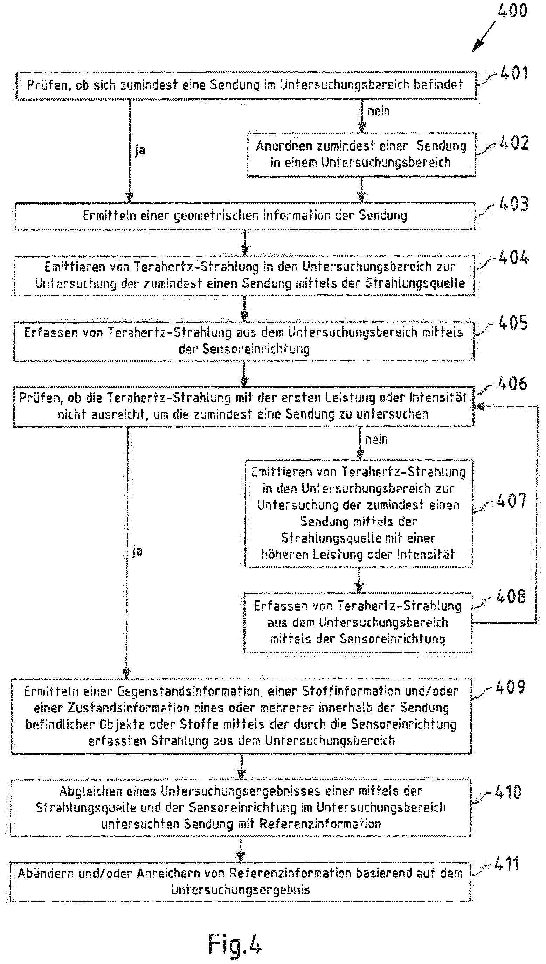

Der Programmspeicher 123 und/oder Hauptspeicher 122 kann weiterhin Referenzinformationen erhalten, mit denen Untersuchungsergebnisse einer mittels THz-Emitter 107 und THz-Sensoren 111 im Untersuchungsbereich 2 untersuchten Sendung 4 abgeglichen werden können, wie in Zusammenhang mit Fig. 4 noch näher beschrieben. Die Referenzinformation kann beispielsweise in einer im Programmspeicher gespeicherten Datenbank hinterlegt sein. Eine Referenzinformation kann basierend auf Untersuchungsergebnis zudem abgeändert oder angereicht werden. Dabei kann beispielsweise ein lernfähiger Algorithmus zum Einsatz kommen. Ebenfalls kann ein maschinelles Lernen eingesetzt werden, um die Referenzinformation zu erzeugen, zu ändern oder anzureichern.

Prozessor 120 steuert weiterhin die Kommunikationsschnittstelle 123, welche beispielsweise eine Netzwerkschnittstelle sein kann und als Netzwerkkarte, Netzwerkmodul und/oder Modem ausgebildet sein kann. Die Kommunikationsschnittstelle 123 ist insbesondere dazu eingerichtet, eine Verbindung der Vorrichtung 101 mit anderen Vorrichtungen, insbesondere über ein (drahtloses) Kommunikationssystem, beispielsweise ein Netzwerk, herzustellen und mit diesen zu kommunizieren. Die Kommunikationsschnittstelle 123 kann beispielsweise Daten (über das Kommunikationssystem) empfangen und an Prozessor 120 weiterleiten und/oder Daten von Prozessor 120 empfangen und (über das Kommunikationssystem) senden. Beispiele für ein Kommunikationssystem sind ein lokales Netzwerk (LAN), ein großräumiges Netzwerk (WAN), ein drahtloses Netzwerk (beispielsweise gemäß dem IEEE-802.11-Standard, dem Bluetooth (LE)-Standard und/oder dem NFC-Standard), ein drahtgebundenes Netzwerk, ein Mobilfunknetzwerk, ein Telefonnetzwerk und/oder das Internet.

Des Weiteren kann Prozessor 120 zumindest ein Ein-/Ausgabegerät 124 steuern. Ein-/Ausgabegerät 124 ist beispielsweise eine Tastatur, eine Maus, eine Anzeigeeinheit, ein Mikrofon, eine berührungsempfindliche Anzeigeeinheit, ein Lautsprecher, ein Lesegerät, ein Laufwerk und/oder eine Kamera. Ein-/Ausgabegerät 124 kann beispielsweise Eingaben eines Benutzers aufnehmen und an Prozessor 120 weiterleiten und/oder Informationen für den Benutzer von Prozessor 120 empfangen und ausgeben.

Fig. 4 zeigt ein Flussdiagramm 400 eines Ausführungsbeispiels eines Verfahrens, welches beispielsweise durch die Vorrichtungen 1, 1', 101 durchgeführt werden kann.

Zunächst erfolgt ein Prüfen, ob sich zumindest eine Sendung im Untersuchungsbereich 2 befindet (Aktion 401). Dieses Prüfen erfolgt vorzugsweise ebenfalls mittels der Terahertz-Strahlungsquelle 6, 6' und der Sensoreinrichtung 10, 10'. Hierzu wird beispielsweise THz-Strahlung mit einer geringeren Leistung oder Intensität (erste Strahlungseigenschaft) als für die spätere Untersuchung verwendet. Grundsätzlich wäre für das Prüfen jedoch auch eine separate Einrichtung denkbar.

Wurde zumindest eine Sendung 4 in dem Untersuchungsbereich 2 angeordnet (Aktion 402), kann von dieser eine geometrische Information ermittelt werden (Aktion 403). Dies kann vorteilhaft bereits durch die zum Prüfen, ob sich zumindest eine Sendung im Untersuchungsbereich 2 befindet, emittierte THz-Strahlung erfolgen. Auch hier ist es jedoch grundsätzlich möglich, dass ein beispielsweise ein zusätzliche Emission von THz-Strahlung erfolgt oder sogar eine separate Einrichtung verwendet wird.

Anschließend wird Terahertz-Strahlung 8 in den Untersuchungsbereich 2 zur Untersuchung der zumindest einen Sendung 4 mittels der Strahlungsquelle 6, 6' emittiert (Aktion 404). Die Terahertz-Strahlung 12 aus dem Untersuchungsbereich 2 wird mittels der Sensoreinrichtung 10, 10' erfasst (Aktion 405).

Sollte ein Prüfen (Aktion 406) ergeben, dass die Terahertz-Strahlung mit der ersten Leistung oder Intensität nicht ausreicht, um die zumindest eine Sendung zu untersuchen, kann Terahertz-Strahlung 8 zur Untersuchung der zumindest einen Sendung 4 mittels der Strahlungsquelle 6, 6' mit einer höheren Leistung oder Intensität in den Untersuchungsbereich 2 emittiert (Aktion 407) und aus diesem mit der Sensoreinrichtung 10, 10' erfasst werden (Aktion 408).

Sofern die Leistung oder Intensität ausreicht, kann eine Gegenstandsinformation, einer Stoffinformation und/oder einer Zustandsinformation eines oder mehrerer innerhalb der Sendung 4 befindlicher Objekte oder Stoffe mittels der durch die Sensoreinrichtung 10, 10' erfassten Strahlung 12 aus dem Untersuchungsbereich 2 ermittelt werden (Aktion 409).

Mit einem Abgleichen (Aktion 410) eines Untersuchungsergebnisses einer mittels der Strahlungsquelle 6, 6' und der Sensoreinrichtung 10,10` im Untersuchungsbereich 2 untersuchten Sendung 4 mit Referenzinformation kann eine Identifikation des Gegenstands, Stoffes oder Zustands erfolgen.

Gegebenenfalls erfolgt ein Abändern und/oder Anreichern von Referenzinformation basierend auf dem Untersuchungsergebnis, sofern dies notwendig sein sollte (Aktion 411).

Die in dieser Spezifikation beschriebenen Ausführungsbeispiele der vorliegenden Erfindung und die diesbezüglich jeweils angeführten optionalen Merkmale und Eigenschaften sollen, im Rahmen der Erfindung, wie in den beigefügten Ansprüchen dargelegt, auch in allen Kombinationen miteinander offenbart verstanden werden. Insbesondere soll auch die Beschreibung eines von einem Ausführungsbeispiel umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Die Verwendung des unbestimmten Artikels schließt eine Mehrzahl nicht aus. Eine einzelne Vorrichtung kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

## Patentansprüche

1. Verfahren zur Untersuchung von Sendungen, das Verfahren umfassend:
- Anordnen (402) zumindest einer Sendung (4) in einem Untersuchungsbereich (2);
- Emittieren (404) von Strahlung (8) in den Untersuchungsbereich (2) zur Untersuchung der zumindest einen Sendung (4) mittels einer Strahlungsquelle (6, 6`);
- Erfassen (405) von Strahlung (12) aus dem Untersuchungsbereich mittels einer Sensoreinrichtung (10, 10`);
wobei die Strahlungsquelle (6, 6') Terahertz-Strahlung emittiert und wobei die Strahlungsquelle (6, 6') im Wesentlichen das gesamte Terahertz-Frequenzspektrum von 1 Terahertz an bis hin zu 20 Terahertz abdeckt,
wobei mittels der durch die Sensoreinrichtung (10, 10') erfassten Strahlung (12) aus dem Untersuchungsbereich (2) a) eine geometrische Information der Sendung (4) und b) eine Gegenstandsinformation, eine Stoffinformation und/oder eine Zustandsinformation eines oder mehrerer innerhalb der Sendung befindlicher Objekte oder Stoffe ermittelt wird, wobei die geometrische Information der Sendung (4) zur Steuerung einer für den Transport der zumindest einen Sendung (4) verwendeten Förderanlage (5) verwendet wird, wobei ein Untersuchungsergebnis einer mittels der Strahlungsquelle (6, 6') und der Sensoreinrichtung (10, 10') im Untersuchungsbereich (2) untersuchten Sendung (4) mit Referenzinformation abgeglichen wird, um eine Identifikation des Gegenstands, Stoffes oder Zustands zu erzielen, und
wobei Referenzinformation basierend auf dem Untersuchungsergebnis abgeändert und/oder angereichert wird.

2. Verfahren nach Anspruch 1, **dadurch gekennzeichnet, dass** die Strahlungsquelle (6, 6') im Wesentlichen das gesamte Terahertz-Frequenzspektrum von 0,5 Terahertz an und/oder bis hin zu 30 Terahertz abdeckt.

3. Verfahren nach Anspruch 1 oder 2, **dadurch gekennzeichnet, dass** die von der Strahlungsquelle (6, 6') abgedeckten Frequenzen des Terahertz-Frequenzspektrums gleichzeitig oder zumindest teilweise zeitversetzt emittiert werden.

4. Verfahren nach einem der vorhergehenden Ansprüche, **dadurch gekennzeichnet, dass** die Terahertz-Strahlungsquelle (6,6') zumindest zwei Terahertz-Emitter (7, 107) umfasst und die Terahertz-Strahlung (8) durch die zumindest zwei Terahertz-Emitter (7, 107) emittiert wird.

5. Verfahren nach einem der vorhergehenden Ansprüche, **dadurch gekennzeichnet, dass** zumindest ein Terahertz-Emitter (7, 107) der Strahlungsquelle (6, 6') die Terahertz-Strahlung (8) breitbandig emittiert.

6. Verfahren nach einem der vorhergehenden Ansprüche, **dadurch gekennzeichnet, dass** die Terahertz-Strahlungsquelle (6, 6') durchgestimmt wird.

7. Verfahren nach einem der vorhergehenden Ansprüche, **dadurch gekennzeichnet, dass** mittels der durch die Sensoreinrichtung (10, 10') erfassten Strahlung (12) aus dem Untersuchungsbereich (2) eine geometrische Information und/oder einer Schriftinformation der Sendung und/oder eines oder mehrerer Objekte innerhalb der Sendung ermittelt wird.

8. Verfahren nach einem der vorhergehenden Ansprüche, **dadurch gekennzeichnet, dass** das Verfahren weiterhin ein Prüfen (401) umfasst, ob sich zumindest eine Sendung (4) im Untersuchungsbereich (2) befindet.

9. Verfahren nach Anspruch 8, **dadurch gekennzeichnet, dass** die Strahlungsquelle (6, 6') zum Prüfen, ob sich zumindest eine Sendung (4) im Untersuchungsbereich (2) befindet, Terahertz-Strahlung (8) mit einer ersten Strahlungseigenschaft aussendet.

10. Verfahren nach Anspruch 8 oder 9, **dadurch gekennzeichnet, dass** die Strahlungsquelle (6, 6`), wenn das Prüfen ergibt, dass sich zumindest eine Sendung (4) im Untersuchungsbereich (2) befindet, Terahertz-Strahlung (8) mit einer zweiten Strahlungseigenschaft aussendet.

11. Verfahren nach einem der vorhergehenden Ansprüche, **dadurch gekennzeichnet, dass** zum Untersuchen der zumindest einen Sendung (4) Terahertz-Strahlung (8) unterschiedlicher Leistung oder Intensität in den Untersuchungsbereich (2) emittiert wird.

12. Verfahren nach einem der vorhergehenden Ansprüche, **dadurch gekennzeichnet, dass** zum Untersuchen der zumindest einen Sendung (2) zunächst Terahertz-Strahlung (8) mit einer ersten Leistung oder Intensität und anschließend Terahertz-Strahlung (8) mit einer zweiten, im Vergleich zur ersten Leistung oder Intensität höheren Leistung oder Intensität in den Untersuchungsbereich (2) emittiert wird.

13. Verfahren nach einem der vorhergehenden Ansprüche, **dadurch gekennzeichnet, dass** die zumindest eine Sendung (4) mittels der Förderanlage (5) in den und/oder aus dem Untersuchungsbereich (2) transportiert wird.

14. Verfahren nach einem der vorhergehenden Ansprüche, **dadurch gekennzeichnet, dass** die zumindest eine Sendung (4) vor und/oder in dem Untersuchungsbereich (2) verlangsamt und/oder abgestoppt wird.

15. Verfahren nach einem der vorhergehenden Ansprüche, **dadurch gekennzeichnet, dass** der Untersuchungsbereich (2) in einem Vereinzelungsbereich der Förderanlage (5) angeordnet ist.

16. Verfahren nach einem der vorhergehenden Ansprüche, **dadurch gekennzeichnet, dass** die Strahlungsquelle (6, 6') und/oder die Sensoreinrichtung (10, 10') oder ein Teil hiervon während der Untersuchung relativ zu einer im Untersuchungsbereich (2) angeordneten Sendung (4) bewegt wird.

17. Vorrichtung zur Untersuchung von Sendungen (4)
- mit einem Untersuchungsbereich (2) für zumindest eine Sendung (4),
- mit einer Strahlungsquelle (6, 6') zur Emission von Strahlung (12) in den Untersuchungsbereich (2) zur Untersuchung der zumindest einen Sendung (4), und
- mit einer Sensoreinrichtung (10, 10') zur Erfassung von Strahlung (12) aus dem Untersuchungsbereich (2),
wobei die Strahlungsquelle (6, 6') eine Terahertz-Strahlungsquelle ist, welche im Wesentlichen das gesamte Terahertz-Frequenzspektrum von 1 Terahertz an bis hin zu 20 Terahertz abdeckt,
wobei die Vorrichtung dazu eingerichtet ist, mittels der durch die Sensoreinrichtung (10, 10') erfassten Strahlung (12) aus dem Untersuchungsbereich (2) a) eine geometrische Information der Sendung (4) und b) eine Gegenstandsinformation, eine Stoffinformation und/oder eine Zustandsinformation eines oder mehrerer innerhalb der Sendung befindlicher Objekte oder Stoffe zu ermitteln, und
wobei die Vorrichtung ferner dazu eingerichtet ist, die geometrische Information der Sendung (4) zur Steuerung einer für den Transport der zumindest einen Sendung (4) verwendeten Förderanlage (5) zu verwenden
wobei die Vorrichtung ferner dazu eingerichtet ist, ein Untersuchungsergebnis einer mittels der Strahlungsquelle (6, 6') und der Sensoreinrichtung (10, 10') im Untersuchungsbereich (2) untersuchten Sendung (4) mit Referenzinformation abzugleichen, um eine Identifikation des Gegenstands, Stoffes oder Zustands zu erzielen, und Referenzinformation basierend auf dem Untersuchungsergebnis abzuändern und/oder anzureichern.

18. Computerprogramm, das Programmanweisungen umfasst, die einen Prozessor (120) einer Vorrichtung gemäß Anspruch 17 zur Ausführung und/oder Steuerung eines Verfahrens gemäß einem der Ansprüche 1 bis 16 veranlassen, wenn das Computerprogramm auf dem Prozessor (120) läuft.

## Claims

1. Method for analyzing consignments, the method comprising:
- arranging (402) at least one consignment (4) in an examination area (2);
- emitting (404) of radiation (8) into the examination area (2) for examination of the at least one consignment (4) by means of a radiation source (6, 6');
- detecting (405) of radiation (12) from the examination area by means of a sensor device (10, 10');
wherein the radiation source (6, 6') emits terahertz radiation and wherein the radiation source (6, 6') substantially covers the entire terahertz frequency spectrum from 1 terahertz on up to 20 terahertz,
wherein by means of the radiation (12) from the examination area (2) detected by the sensor device (10, 10') a) a geometric information of the consignment (4) and b) an object information, a substance information and/or a status information of one or more objects or substances located within the consignment is determined,
wherein the geometric information of the consignment (4) is used to control a conveyor system (5) used for the transportation of the at least one consignment (4),
wherein an examination result of a consignment (4) examined by means of the radiation source (6, 6') and the sensor device (10, 10') in the examination area (2) is compared with reference information to achieve an identification of the object, substance, or status, and wherein reference information is modified and/or enriched based on the examination result.

2. Method according to claim 1, **characterized in that** the radiation source (6, 6') substantially covers the entire terahertz frequency spectrum from 0.5 terahertz on and/or up to 30 terahertz.

3. Method according to claim 1 or 2, **characterized in that** the frequencies of the terahertz frequency spectrum covered by the radiation source (6, 6') are emitted simultaneously or at least partially with a time delay.

4. Method according to one of the preceding claims, **characterized in that** the terahertz radiation source (6, 6') comprises at least two terahertz emitters (7, 107) and the terahertz radiation (8) is emitted by the at least two terahertz emitters (7, 107).

5. Method according to one of the preceding claims, **characterized in that** at least one terahertz emitter (7, 107) of the radiation source (6, 6') emits the terahertz radiation (8) in broadband.

6. Method according to one of the preceding claims, **characterized in that** the terahertz radiation source (6, 6') is tuned.

7. Method according to one of the preceding claims, **characterized in that** by means of the radiation (12) detected by the sensor device (10, 10') from the examination area (2) a geometric information and/or written information of the consignment and/or of one or more objects within the consignment is determined.

8. Method according to one of the preceding claims, **characterized in that** the method further comprises examining (401) whether at least one consignment (4) is located in the examination area (2).

9. Method according to claim 8, **characterized in that** the radiation source (6, 6') for the examination whether at least one consignment (4) is located in the examination area (2) emits terahertz radiation (8) with a first radiation characteristic.

10. Method according to claim 8 or 9, **characterized in that** the radiation source (6, 6') emits terahertz radiation (8) with a second radiation characteristic when the examination shows that at least one consignment (4) is located in the examination area (2).

11. Method according to one of the preceding claims, **characterized in that**, in order to examine the at least one consignment (4), terahertz radiation (8) of different power or intensity is emitted into the examination area (2).

12. Method according to one of the preceding claims, **characterized in that**, in order to examine the at least one consignment (2), first, terahertz radiation (8) with a first power or intensity and then terahertz radiation (8) with a second power or intensity which is higher than the first power or intensity is emitted into the examination area (2).

13. Method according to one of the preceding claims, **characterized in that** the at least one consignment (4) is transported into and/or out of the examination area (2) by means of the conveyor system (5).

14. Method according to one of the preceding claims, **characterized in that** the at least one consignment (4) is slowed down and/or stopped before and/or in the examination area (2).

15. Method according to one of the preceding claims, **characterized in that** the examination area (2) is arranged in a separation area of the conveyor system (5).

16. Method according to one of the preceding claims, **characterized in that** the radiation source (6, 6') and/or the sensor device (10, 10') or a part thereof is moved relative to a consignment (4) arranged in the examination area (2) during the examination.

17. Apparatus for examining consignments (4)
- with an examination area (2) for at least one consignment (4),
- with a radiation source (6, 6') for emitting radiation (12) into the examination area (2) for examining the at least one consignment (4), and
- with a sensor device (10, 10') for detecting of radiation (12) from the examination area (2),
wherein the radiation source (6, 6') is a terahertz radiation source which substantially covers the entire terahertz frequency spectrum from 1 terahertz on up to 20 terahertz,
wherein the apparatus is configured to determine a) a geometric information of the consignment (4) and b) an object information, a substance information and/or a status information of one or more objects or substances located within the consignment by means of the radiation (12) detected by the sensor device (10, 10') from the examination area (2), and
wherein the apparatus is further configured to use the geometric information of the consignment (4) to control a conveyor system (5) used for the transportation of the at least one consignment (4),
wherein the device is further configured to compare an examination result of a consignment (4) examined by means of the radiation source (6, 6') and the sensor device (10, 10') in the examination area (2) with reference information to achieve an identification of the object, substance, or status, and to modify and/or enrich reference information based on the examination result.

18. Computer program comprising program instructions that cause a processor (120) of an apparatus according to claim 17 to execute and/or control a method according to any one of claims 1 to 16 when the computer program is running on the processor (120).

## Revendications

1. Procédé d'analyse des envois, le procédé comprenant :
- arranger (402) au moins un envoi (4) dans une zone d'examen (2) ;
- émettre (404) un rayonnement (8) dans la zone d'examen (2) pour l'examen d'au moins un envoi (4) au moyen d'une source de rayonnement (6, 6') ;
- détecter (405) du rayonnement (12) provenant de la zone d'examen au moyen d'un dispositif de détection (10, 10') ;
dans lequel la source de rayonnement (6, 6') émet un rayonnement térahertz et dans lequel la source de rayonnement (6, 6') couvre sensiblement tout le spectre de fréquences térahertz de 1 térahertz à 20 térahertz,
dans lequel le rayonnement (12) de la zone d'examen (2) détecté par le dispositif de détection (10, 10') permet de déterminer a) une information géométrique de l'envoi (4) et b) une information sur l'objet, une information sur la substance et/ou une information sur l'état d'un ou de plusieurs objets ou substances se trouvant dans l'envoi,
dans lequel les informations géométriques de l'envoi (4) sont utilisées pour contrôler un système de convoyage (5) utilisé pour le transport d'au moins un envoi (4),
dans lequel le résultat de l'examen d'un envoi (4) examiné au moyen de la source de rayonnement (6, 6') et du dispositif de détection (10, 10') dans la zone d'examen (2) est comparé avec l'information de référence afin d'identifier l'objet, la substance ou l'état, et dans lequel l'information de référence est modifiée et/ou enrichie sur la base du résultat de l'examen.

2. Procédé selon la revendication 1, **caractérisé en ce que** la source de rayonnement (6, 6') couvre sensiblement tout le spectre de fréquences térahertz de 0,5 térahertz et/ou jusqu'à 30 térahertz.

3. Procédé selon la revendication 1 ou 2, **caractérisé en ce que** les fréquences du spectre de fréquences térahertz couvertes par la source de rayonnement (6, 6') sont émises simultanément ou au moins partiellement en différé.

4. Procédé selon l'une des revendications précédentes, **caractérisé en ce que** la source de rayonnement térahertz (6, 6') comprend au moins deux émetteurs térahertz (7, 107) et le rayonnement térahertz (8) est émis par lesdits au moins deux émetteurs térahertz (7, 107).

5. Procédé selon l'une des revendications précédentes, **caractérisé en ce qu'**au moins un émetteur térahertz (7, 107) de la source de rayonnement (6, 6') émet le rayonnement térahertz (8) à large bande.

6. Procédé selon l'une des revendications précédentes, **caractérisé en ce que** la source de rayonnement térahertz (6, 6') est accordée.

7. Procédé selon l'une des revendications précédentes, **caractérisé en ce qu'**une information géométrique et/ou une information d'écriture de l'envoi et/ou d'un ou de plusieurs objets à l'intérieur de l'envoi est déterminée au moyen du rayonnement (12) de la zone d'examen (2) détecté par le dispositif de détection (10, 10').

8. Procédé selon l'une des revendications précédentes, **caractérisé en ce que** le procédé comprend en outre un examen (401) si au moins un envoi (4) se trouve dans la zone d'examen (2).

9. Procédé selon la revendication 8, **caractérisé en ce que** la source de rayonnement (6, 6') émet un rayonnement térahertz (8) ayant une première caractéristique de rayonnement pour l'examen si au moins un envoi (4) se trouve dans la zone d'examen (2).

10. Procédé selon la revendication 8 ou 9, **caractérisé en ce que**, lorsque l'examen révèle qu'au moins un envoi (4) se trouve dans la zone d'examen (2), la source de rayonnement (6, 6') émet un rayonnement térahertz (8) ayant une deuxième caractéristique de rayonnement.

11. Procédé selon l'une des revendications précédentes, **caractérisé en ce que**, pour examiner ledit au moins un envoi (4), un rayonnement térahertz (8) de puissance ou d'intensité différente est émis dans la zone d'examen (2).

12. Procédé selon l'une des revendications précédentes, **caractérisé en ce que**, pour examiner ledit au moins un envoi (2), un rayonnement térahertz (8) d'une première puissance ou intensité, puis un rayonnement térahertz (8) d'une seconde puissance ou intensité supérieure à la première puissance ou intensité sont émis dans la zone d'examen (2).

13. Procédé selon l'une des revendications précédentes, **caractérisé en ce que** ledit au moins un envoi (4) est transporté dans et/ou hors de la zone d'examen (2) au moyen du système de convoyage (5).

14. Procédé selon l'une des revendications précédentes, **caractérisé en ce que** ledit au moins un envoi (4) est ralenti et/ou arrêté avant et/ou dans la zone d'examen (2).

15. Procédé selon l'une des revendications précédentes, **caractérisé en ce que** la zone d'examen (2) est disposée dans une zone de séparation du système de convoyage (5).

16. Procédé selon l'une des revendications précédentes, **caractérisé en ce que** la source de rayonnement (6, 6') et/ou le dispositif de détection (10, 10') ou une partie de ceux-ci est déplacé pendant l'examen par rapport à un envoi (4) disposé dans la zone d'examen (2).

17. Dispositif pour l'examen d'envois (4)
- avec une zone d'examen (2) pour au moins un envoi (4),
- avec une source de rayonnement (6, 6') pour l'émission de rayonnement (12) dans la zone d'examen (2) pour l'examen du au moins un envoi (4), et
- avec un dispositif de détection (10, 10') pour détecter le rayonnement (12) provenant de la zone d'examen (2),
dans lequel la source de rayonnement (6, 6') est une source de rayonnement térahertz qui couvre sensiblement tout le spectre de fréquences térahertz de 1 térahertz à 20 térahertz,
dans lequel le dispositif est configuré pour déterminer a) une information géométrique de l'envoi (4) et b) une information sur l'objet, une information sur la substance et/ou une information sur l'état d'un ou de plusieurs objets ou substances se trouvant dans l'envoi au moyen du rayonnement (12) détecté par le dispositif de détection (10, 10') à partir de la zone d'examen (2), et
dans lequel le dispositif est en outre configuré pour utiliser l'information géométrique de l'envoi (4) pour contrôler un système de convoyage (5) utilisée pour le transport de l'au moins un envoi (4),
dans lequel le dispositif est en outre configuré pour comparer un résultat d'examen d'un envoi (4) examiné au moyen de la source de rayonnement (6, 6') et du dispositif de détection (10, 10') dans la zone d'examen (2) avec l'information de référence afin d'identifier l'objet, la substance ou l'état, et dans lequel l'information de référence est modifiée et/ou enrichie sur la base du résultat de l'examen.

18. Programme informatique comprenant des instructions de programme qui amènent un processeur (120) d'un dispositif selon la revendication 17 à exécuter et/ou à contrôler un procédé selon l'une quelconque des revendications 1 à 16 lorsque le programme informatique est exécuté sur le processeur (120).
